# EUROPÄISCHE PATENTSCHRIFT

(11) **EP 1 724 561 B1**
(45) Veröffentlichungstag und Bekanntmachung des Hinweises auf die Patenterteilung: **11.03.2009**
(21) Anmeldenummer: 06001578.1
(22) Anmeldetag: 26.01.2006
(51) Int. Cl.: G01K 1/16, G01K 7/22

(54) **Temperatursensor für ein IGBT-Modul**
Temperature sensor for an IGBT module
Capteur de température pour un module IGBT

(30) Priorität: 01.04.2005 DE 202005005171 U
(43) Veröffentlichungstag der Anmeldung: 22.11.2006
(73) Patentinhaber: Converteam GmbH, 12277 Berlin (DE)
(72) Erfinder: Nahrstaedt, Manfred, Dr., 12247 Berlin (DE); Steglich, Jürgen, 10965 Berlin (DE); Kocur, Michael, 13403 Berlin (DE)
(74) Vertreter: Schäfer, Wolfgang

(56) Entgegenhaltungen:
- JP-A- 2004 087 871
- US-A- 5 049 961
- DATABASE WPI Week 200645 Derwent Publications Ltd., London, GB; AN 2006-433708 XP002403345 & CN 1 714 715 A (LG ELECTRONIC TIANJIN ELECTRIC APPLIANCE) 4. Januar 2006 (2006-01-04)
- JUN HE ET AL: "Thermal design and measurements of IGBT power modules: transient and steady state" INDUSTRY APPLICATIONS CONFERENCE, 1999. THIRTY-FOURTH IAS ANNUAL MEETING. CONFERENCE RECORD OF THE 1999 IEEE PHOENIX, AZ, USA 3-7 OCT. 1999, PISCATAWAY, NJ, USA,IEEE, US, Bd. 2, 3. Oktober 1999 (1999-10-03), Seiten 1440-1444, XP010355259 ISBN: 0-7803-5589-X
- STOCKMEIER T ET AL: "Novel high power semiconductor module for trench IGBTs" 24. Mai 2004 (2004-05-24), POWER SEMICONDUCTOR DEVICES AND ICS, 2004. PROCEEDINGS. ISPSD '04. THE 16TH INTERNATIONAL SYMPOSIUM ON KITAKYUSHU INT. CONF. CTR, JAPAN MAY 24-27, 2004, PISCATAWAY, NJ, USA,IEEE, PAGE(S) 343-346 , XP010723412 ISBN: 4-88686-060-5 * Abbildung 6 *

## Beschreibung

Die Erfindung betrifft ein IGBT-Modul mit einem Temperatursensor.

Es sind IGBT-Module (IGBT = insulated gate bipolar transistor) bekannt, die beispielsweise quaderförmig ausgebildet sind, und die in ihren Eckbereichen mit Bohrungen versehen sind. Ein derartiges IGBT-Modul wird zu Kühlzwecken mit der Bodenplatte auf einem Kühlkörper zur Anlage gebracht. Zur Befestigung wird das IGBT-Modul über die Bohrungen mit dem Kühlkörper verschraubt.

Weiterhin ist es bekannt, an dem Kühlkörper einen Temperatursensor anzubringen, der ein Sensorelement zur Temperaturmessung aufweist. Auf diese Weise kann die Temperatur des Kühlkörpers und damit die Temperatur des IGBT-Moduls ermittelt werden.

Aufgabe der Erfindung ist es, die Genauigkeit bei der Messung der Temperatur des IGBT-Moduls zu verbessern.

Die Erfindung löst diese Aufgabe durch ein IGBT-Modul mit einem Temperatursensor nach dem Anspruch 1.

Erfindungsgemäß wird also die Temperatur des IGBT-Moduls unmittelbar an dem IGBT-Modul gemessen. Hierzu wird das Trägerelement, das das Sensorelement enthält, in einen direkten Kontakt mit dem IGBT-Modul gebracht. Dies wird erfindungsgemäß dadurch erreicht, dass das Trägerelement flächig an das IGBT-Modul angelegt wird.

Der Vorteil der Erfindung besteht insbesondere darin, dass aufgrund des direkten Kontakts des Trägerelements und des IGBT-Moduls eine sehr große Genauigkeit der Temperaturmessung erreicht wird. Ungenauigkeiten, die aus der nur mittelbaren Messung der Temperatur des Kühlkörpers entstehen, werden vermieden.

Bei einer vorteilhaften Ausgestaltung des erfindungsgemäßen Temperatursensors ist das Trägerelement zumindest teilweise eben ausgebildet, und ein Teil des IGBT-Moduls ist ebenfalls zumindest teilweise eben ausgebildet, und das Trägerelement und das Teil des IGBT-Moduls liegen im zusammengebauten Zustand in ihren ebenen Bereichen aneinander an. Durch diese Maßnahmen, insbesondere durch die im wesentlichen ebene Ausbildung der aneinander anliegenden Teile, wird ein hoher Wärmeübergang von dem IGBT-Modul zu dem Trägerelement bei einem gleichzeitig einfachen Aufbau erreicht.

Besonders vorteilhaft ist es, wenn das mit dem Trägerelement in Kontakt stehende Teil des IGBT-Moduls ein Bestandteil der Bodenplatte des IGBT-Moduls ist.

Auf diese Weise wird erreicht, dass die von dem IGBT-Modul erzeugte Wärme, die - wie bereits erwähnt wurde - über die Bodenplatte an einen dort angeordneten Kühlkörper abgeleitet wird, gleichzeitig über die Bodenplatte an das Trägerelement weitergeleitet wird. Das Trägerelement weist somit im wesentlichen immer die Temperatur der Bodenplatte und damit eine Temperatur auf, die insbesondere den Transistoren des IGBT-Moduls nahe kommt. Die Genauigkeit der Temperaturmessung wird auf diese Weise weiter verbessert.

Bei einer besonders vorteilhaften Weiterbildung des erfindungsgemäßen Temperatursensor ist das Trägerelement im zusammengebauten Zustand mit dem IGBT-Modul verschraubt, wobei diese Verschraubung vorzugsweise gleichzeitig dazu dient, das IGBT-Modul mit einem Kühlkörper zu verbinden. Daraus ergibt sich der Vorteil, dass der Temperatursensor nicht separat mit dem IGBT-Modul verbunden werden muss, sondern dass diese Verbindung über die bereits vorhandene Verschraubung des IGBT-Moduls mit dem Kühlkörper ohne einen zusätzlichen Aufwand erreicht wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

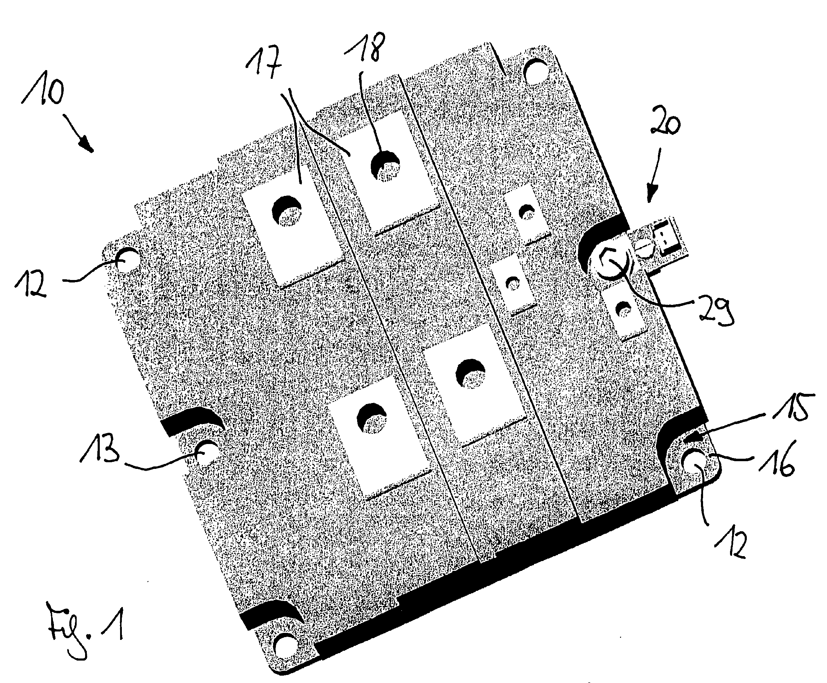

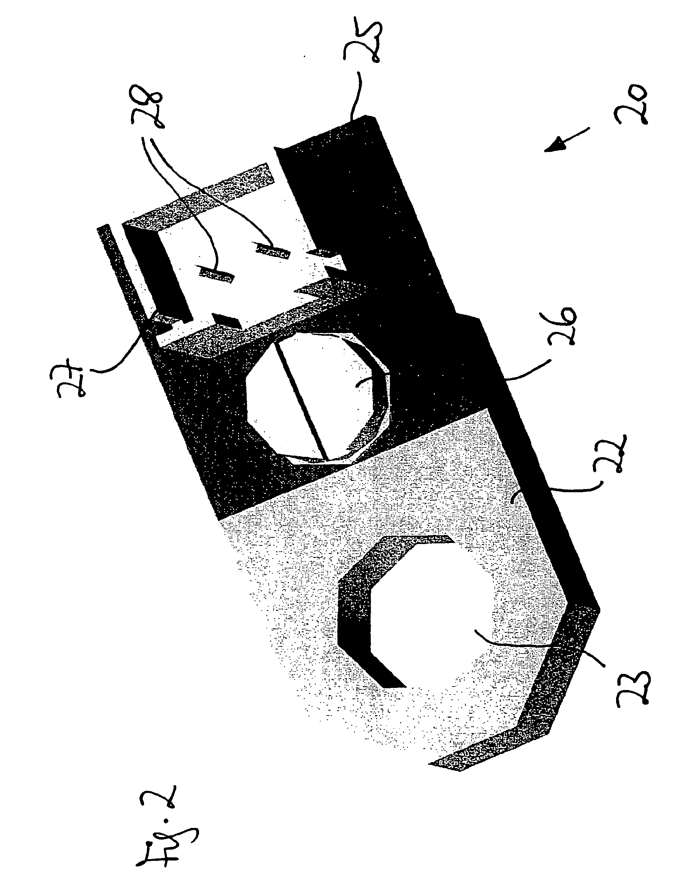

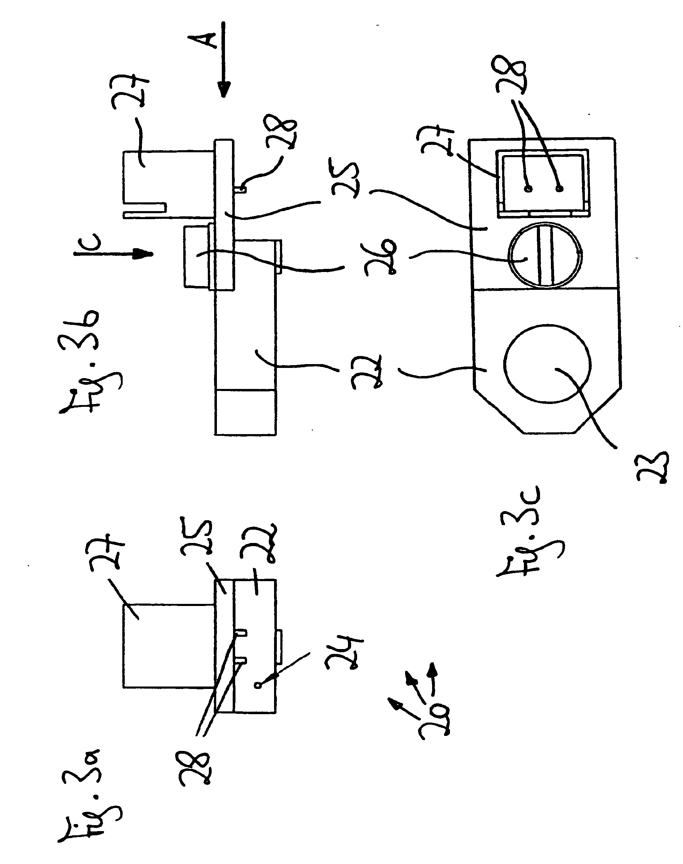

Figur 1 zeigt eine perspektivische Ansicht eines Ausführungsbeispiels eines IGBT-Moduls mit einem erfindungsgemäßen Temperatursensor, Figur 2 zeigt eine perspektivische Ansicht des Temperatursensors der Figur 1, und Figuren 3a bis 3c zeigen schematische Ansichten des Temperatursensors der Figur 1 aus drei Richtungen, und zwar stellt die Figur 3a eine Ansicht des Temperatursensors aus der Richtung A der Figur 3b dar, und die Figur 3c stellt eine Ansicht des Temperatursensors aus der Richtung C der Figur 3b dar.

In der Figur 1 ist ein IGBT-Modul 10 (IGBT = insulated gate bipoar transistor) aus einer Blickrichtung dargestellt, aus der die Oberseite des IGBT-Moduls 10 sichtbar ist. Mit einer die Unterseite bildenden Bodenplatte kann das IGBT-Modul 10 in Anlage zu einem nicht-dargestellten Kühlkörper gebracht werden.

Das IGBT-Modul 10 ist etwa quaderförmig ausgebildet, besitzt eine etwa rechteckförmige Ober- bzw. Unterseite und weist in den Eckbereichen jeweils eine Bohrung 12 auf. Weiterhin ist das IGBT-Modul 10 mit zwei einander gegenüberstehenden Bohrungen 13 versehen, die am Rand des IGBT-Moduls 10 etwa mittig zwischen zwei Eckbereichen angeordnet sind. Die Bohrungen 12, 13 sind im Bereich von Ausnehmungen 15 angeordnet, und zwar in einem dort vorhandenen Teil 16 der Bodenplatte des IGBT-Moduls 10. Dieses Teil 16 der Bodenplatte ist im Bereich der Ausnehmungen 15 im wesentlichen flach ausgebildet und bildet eine ebene Fläche mit der Unterseite des IGBT-Moduls 10. Das Teil 16 stellt ein Bestandteil der die Unterseite bildenden Bodenplatte des IGBT-Moduls 10 dar.

Durch die Bohrungen 12, 13 können Schrauben hindurch gesteckt werden. Mit diesen Schrauben kann das IGBT-Modul 10 an dem erwähnten Kühlkörper befestigt werden. Aufgrund der Ausnehmungen 15 sind die Schrauben dann im Hinblick auf das IGBT-Modul 10 versenkt angeordnet.

Bei den weiteren, auf der Oberseite des IGBT-Moduls 10 vorhandenen, etwa rechteckförmigen Erhebungen 17 mit darin befindlichen zylindrischen Vertiefungen 18 handelt es sich um die elektrischen Anschlusspunkte des IGBT-Moduls 10, über die die Transistoren des IGBT-Moduls 10 in eine elektrische Schaltung eingebunden werden können.

Einer der Bohrungen 12, 13 ist ein Temperatursensor 20 zugeordnet. In der Figur 1 ist der Temperatursensor 20 einer der beiden Bohrungen 13 zugeordnet. Es versteht sich, dass der Temperatursensor 20 auch jeder anderen der Bohrungen 12, 13 zugeordnet sein kann.

Zur nachfolgenden Erläuterung des Temperatursensors 20 wird auf die Figuren 2 und 3 verwiesen. In der Figur 2 ist der Temperatursensor 20 aus etwa derselben Blickrichtung wie in der Figur 1, jedoch ohne das IGBT-Modul 10 und in einer Vergrößerung dargestellt. In der Figur 3 ist der Temperatursensor 20 in drei Ansichten dargestellt.

Der Temperatursensor 20 weist ein Trägerelement 22 auf, das gute, wärmeleitende Eigenschaften besitzt. Das Trägerelement 22 ist als flaches, ebenes Bauteil ausgebildet. Das Trägerelement 22 weist eine Form auf, die im wesentlichen derjenigen Ausnehmung 15 angepasst ist, die im Bereich der Bohrung 12 vorhanden ist, der der Temperatursensor 20 zugeordnet ist. Die Form des Trägerelements 22 ist insbesondere derart ausgebildet, dass es in die zugehörige Ausnehmung 15 eingefügt werden kann, ohne dass ein wesentlicher Zwischenraum zu der Ausnehmung 15 des IGBT-Moduls 10 verbleibt.

Weiterhin weist das Trägerelement 22 eine Form auf, die derart ausgebildet ist, dass das Trägerelement 22 flächig an dem Teil 16 der Bodenplatte des IGBT-Moduls 10 zur Anlage kommen kann.

Im eingelegten Zustand liegt das Trägerelement 22 mit seiner flachen Seite auf dem im Bereich der Ausnehmung 15 vorhandenen, flachen Teil 16 der Bodenplatte des IGBT-Moduls 10 auf. Dies bedeutet, dass das Trägerelement 22 auf derjenigen Seite des Teils 16 und damit der Bodenplatte des IGBT-Moduls 10 anliegt, die nicht die Unterseite des IGBT-Moduls 10 darstellt, und die damit nicht mit dem erwähnten Kühlkörper in Kontakt kommt. Durch die erläuterte und in der Figur 1 gezeigte Anordnung des Trägerelements 22 wird erreicht, dass das Trägerelement 22 in unmittelbarem Kontakt mit der Bodenplatte des IGBT-Moduls 10 steht, und dass somit Wärme von der Bodenplatte des IGBT-Moduls 10 auf das Trägerelement 22 übergehen kann.

In dem Trägerelement 22 ist eine Ausnehmung 23 enthalten, die derart angeordnet ist, dass sie im eingelegten Zustand im wesentlichen zu derjenigen Bohrung 13 etwa koaxial ausgerichtet ist, der der Temperatursensor 20 zugeordnet ist. Die Ausnehmung 23 ist insbesondere etwa kreisförmig ausgebildet und weist einen Durchmesser auf, der etwa dem Durchmesser der zugeordneten Bohrung 13 entspricht oder größer ist als dieser.

In dem Trägerelement 22 ist eine Bohrung 24 enthalten, die zur Aufnahme eines nicht-dargestellten Sensorelements vorgesehen ist. Die Bohrung ist insbesondere aus der Figur 3a zu entnehmen. Die Bohrung 24 ist auf einer der Schmalseiten des Trägerelements 22 angeordnet und etwa parallel zur der Längsausdehnung des Trägerelements 22 ausgerichtet. In der Figur 3a ist die Bohrung 24 beispielhaft auf derjenigen Schmalseite des Trägerelements 22 angeordnet, die einer nachfolgend erläuterten Leiterplatte 25 und insbesondere dort vorhandenen Anschlussstiften 28 zugewandt ist.

Das Sensorelement ist derart ausgebildet, dass es seine physikalischen Eigenschaften in Abhängigkeit von der Temperatur ändert. Beispielsweise kann es sich bei dem Sensorelement um einen sogenannten NTC-Widerstand (NTC = negative temperature coefficient) handeln. Ein derartiger NTC-Widerstand ist insbesondere tropfenförmig ausgebildet und weist beispielsweise eine Ausdehnung in der Größenordnung von wenigen Millimetern, z.B. 1,5 mm, auf. Das Sensorelement ist mit zwei nicht-dargestellten Ausgangsleitungen versehen, an denen ein die gemessene Temperatur repräsentierendes, elektrisches Ausgangssignal abgegriffen werden kann.

Das Sensorelement kann mit Hilfe eines wärmeleitfähigen Klebers in der Bohrung 24 fixiert sein. Die isolierten Ausgangsleitungen des Sensorelements ragen dann aus der Bohrung 24 heraus.

Der Temperatursensor 20 weist eine ebene, etwa rechteckförmige Leiterplatte 25 auf, die mechanisch mit dem Trägerelement 22 verbunden ist. Zu diesem Zweck ist eine Schraubverbindung 26 vorgesehen. Es versteht sich, dass diese Verbindung auch andersartig ausgebildet sein kann.

Die Leiterplatte 25 trägt eine Buchse 27 mit zwei Anschlussstiften 28. Die Buchse 27 kann auf die Leiterplatte 25 aufgelötet sein. In diesem Fall können die Anschlussstifte 28 durch die Leiterplatte 25 hindurch gesteckt sein.

Die beiden Anschlussstifte 28 können direkt mit den erwähnten Anschlussleitungen des Sensorelements elektrisch verbunden sein. Damit kann das ebenfalls bereits erwähnte Ausgangssignal des Sensorelements über die Buchse 27 direkt abgegriffen werden.

Gegebenenfalls können auf der Leiterplatte 25 auch noch sonstige elektrische Bauelemente vorhanden sein, beispielsweise Widerstände, Dioden oder dergleichen. Auf diese Weise kann auf der Leiterplatte 25 eine elektrische Schaltung aufgebaut und mit dem Ausgangssignal des Sensorelements verknüpft sein. In diesem Fall kann das Ausgangssignal des Sensorelements indirekt über die Buchse 27 abgegriffen werden.

Wie dies aus der Figur 1 hervorgeht, ist der Temperatursensor 20 mit seinem Trägerelement 22 im Bereich der Ausnehmung 13 des IGBT-Moduls 10 angeordnet. Das Trägerelement 22 des Temperatursensors 20 liegt dabei ganzflächig mit seiner ebenen Seite auf dem ebenen Teil 16 der Bodenplatte des IGBT-Moduls 10 an. Zwischen den aneinander anliegenden Flächen des Trägerelements 22 und des Teils 16 des IGBT-Moduls 10 kann eine Wärmeleitpaste oder dergleichen vorgesehen sein. Damit ist ein Wärmeübergang von dem IGBT-Modul 10 über das Teil 16 der Bodenplatte auf das Trägerelement 22 möglich, so dass das Trägerelement 22 immer im wesentlichen eine der Temperatur der Transistoren des IGBT-Moduls 10 nahekommende Temperatur aufweist. Diese Temperatur wird dann innerhalb des Trägerelements 22 an das Sensorelement weitergegeben, das somit ebenfalls eine der Temperatur der Transistoren des IGBT-Moduls 10 nahekommende Temperatur aufweist.

In dem in der Figur 1 gezeigten zusammengebauten Zustand ist der Temperatursensor 20 dadurch mit dem IGBT-Modul 10 mechanisch verbunden, dass eine Schraube 29 durch die Ausnehmung 23 des Trägerelements 22 und durch die Bohrung 13 des IGBT-Moduls 10 hindurch gesteckt ist, die in nichtdargestellter Weise mit dem bereits erwähnten Kühlkörper verschraubt ist.

Wie dies ebenfalls der Figur 1 zu entnehmen ist, steht die Leiterplatte 25 des Temperatursensors 20 im zusammengebauten Zustand über das IGBT-Moduls 10 über. Die Buchse 27 ist ohne weiteres zugänglich, so dass ein Stecker in die Buchse 27 eingesteckt werden kann, über den dann das Ausgangssignal des Sensorelements 22 abgegriffen werden kann.

Durch die Ausbildung und Anordnung des Temperatursensors 20 wird erreicht, dass - wie erläutert wurde - das in dem Trägerelement 22 untergebrachte Sensorelement immer im wesentlichen eine Temperatur aufweist, die der Temperatur der Transistoren des IGBT-Moduls 10 nahe kommt. Die Temperatur der Transistoren des IGBT-Moduls 10 kann damit mit Hilfe des Temperatursensors 20 sehr genau gemessen werden.

## Patentansprüche

1. IGBT-Modul (10) mit Temperatursensor (20), **dadurch gekennzeichnet, dass** der Temperatursensor (20) ein Trägerelement (22) aufweist, in dem ein Sensorelement zur Temperaturmessung untergebracht ist, und dass das Trägerelement (22) eine Form aufweist, die derart ausgebildet ist, dass das Trägerelement (22) im zusammengebauten Zustand flächig an dem IGBT-Modul (10) zur Anlage kommt

2. IGBT-Modul (10) mit Temperatursensor (20) nach Anspruch 1, **dadurch gekennzeichnet, dass** das Trägerelement (22) des Temperatursensors (20) zumindest teilweise eben ausgebildet ist, dass ein Teil (16) des IGBT-Moduls (10) zumindest teilweise eben ausgebildet ist, und dass das Trägerelement (22) und das Teil (16) des IGBT-Moduls (10) im zusammengebauten Zustand in ihren ebenen Bereichen aneinander anliegen.

3. IGBT-Modul (10) mit Temperatursensor (20) nach Anspruch 2, **dadurch gekennzeichnet, dass** das Teil (16) ein Bestandteil der Bodenplatte des IGBT-Moduls (10) ist.

4. IGBT-Modul (10) mit Temperatursensor (20) nach einem der vorstehenden Ansprüche, **dadurch gekennzeichnet, dass** zwischen dem Trägerelement (22) des Temperatursensors (20) und dem IGBT-Modul (10) im zusammengebauten Zustand eine Wärmeleitpaste oder dergleichen vorhanden ist.

5. IGBT-Modul (10) mit Temperatursensor (20) nach einem der vorstehenden Ansprüche, wobei das IGBT-Modul (10) mit einer Bohrung (13) versehen ist, die in dem IGBT-Modul (10) enthalten ist, **dadurch gekennzeichnet, dass** das Trägerelement (22) des Temperatursensors (20) im zusammengebauten Zustand mit dem IGBT-Modul (10) verschraubt ist.

6. IGBT-Modul (10) mit Temperatursensor (20) nach Anspruch 5, **dadurch gekennzeichnet, dass** die Verschraubung gleichzeitig dazu dient, das IGBT-Modul (10) mit einem Kühlkörper zu verbinden.

7. IGBT-Modul (10) mit Temperatursensor (20) nach einem der Ansprüche 5 oder 6, **dadurch gekennzeichnet, dass** die Bohrung (13) des IGBT-Moduls (10) im Bereich einer Ausnehmung (15) des IGBT-Moduls (10) angeordnet ist.

8. IGBT-Modul (10) mit Temperatursensor (20) nach einem der vorstehenden Ansprüche, **dadurch gekennzeichnet, dass** eine Leiterplatte (25) vorgesehen ist, die mit dem Trägerelement (22) des Temperatursensors (20) verbunden ist.

9. IGBT-Modul (10) mit Temperatursensor (20) nach Anspruch 8, **dadurch gekennzeichnet, dass** auf der Leiterplatte (25) eine Buchse (27) oder dergleichen angebracht ist, über die ein Ausgangssignal des Sensorelements abgreifbar ist.

10. IGBT-Modul (10) mit Temperatursensor (20) nach einem der vorstehenden Ansprüche, **dadurch gekennzeichnet, dass** das Trägerelement (22) des Temperatursensors (20) aus einem wärmeleitenden Material besteht.

11. IGBT-Modul (10) mit Temperatursensor (20) nach einem der vorstehenden Ansprüche, **dadurch gekennzeichnet, dass** das Sensorelement des Temperatursensors (20) in einer Bohrung (24) des Trägerelements (22) enthalten ist.

12. IGBT-Modul (10) mit Temperatursensor (20) nach Anspruch 11, **dadurch gekennzeichnet, dass** das Sensorelement mit einem wärmeleitfähigen Kleber in der Bohrung (24) fixiert ist.

## Claims

1. IGBT module (10) with temperature sensor (20), **characterised in that** the temperature sensor (20) possesses a mounting element (22) in which a sensor element for temperature measurement is housed, and that the mounting element (22) is designed in such a form that the mounting element (22) lies flat against the IGBT module (10) when assembled.

2. IGBT module (10) with temperature sensor (20) according to claim 1, **characterised in that** the mounting element (22) of the temperature sensor (20) is at least partially flat in form, that a part (16) of the IGBT module (10) is at least partially flat in form, and that the flat areas of the mounting element (22) and the part (16) of the IGBT module (10) lie against one another when assembled.

3. IGBT module (10) with temperature sensor (20) according to claim 2, **characterised in that** the part (16) is a part of the base plate of the IGBT module (10).

4. IGBT module (10) with temperature sensor (20) according to one of the preceding claims, **characterised in that** a thermal compound or similar is provided between the mounting element (22) of the temperature sensor (20) and the IGBT module (10) when assembled.

5. IGBT module (10) with temperature sensor (20) according to one of the preceding claims, whereby the IGBT module (10) is provided with a bore (13) which is contained in the IGBT module (10), **characterised in that** the mounting element (22) of the temperature sensor (20) is screwed together with the IGBT module (10) when assembled.

6. IGBT module (10) with temperature sensor (20) according to claim 5, **characterised in that** the screwed connection simultaneously serves to connect the IGBT module (10) with a heat sink.

7. IGBT module (10) with temperature sensor (20) according to one of the claims 5 or 6, **characterised in that** the bore (13) in the IGBT module (10) is arranged in proximity to a recess (15) in the IGBT module (10).

8. IGBT module (10) with temperature sensor (20) according to one of the preceding claims, **characterised in that** a circuit board (25) is provided which is connected with the mounting element (22) of the temperature sensor (20).

9. IGBT module (10) with temperature sensor (20) according to claim 8, **characterised in that** a socket (27) or similar is fitted to the circuit board (25) via which an output signal from the sensor element can be picked up.

10. IGBT module (10) with temperature sensor (20) according to one of the preceding claims, **characterised in that** the mounting element (22) of the temperature sensor (20) consists of a thermally-conductive material.

11. IGBT module (10) with temperature sensor (20) according to one of the preceding claims, **characterised in that** the sensor element of the temperature sensor (20) is contained in a bore (24) in the mounting element (22).

12. IGBT module (10) with temperature sensor (20) according to claim 11, **characterised in that** the sensor element is fixed in the bore (24) using a thermally-conductive adhesive.

## Revendications

1. Module IGBT (10) avec capteur de température (20), **caractérisé en ce que** le capteur de température (20) comprend un élément support (22) dans lequel est logé un élément capteur destiné à mesurer la température, et **en ce que** l'élément support (22) affecte une forme telle que, à l'état monté, l'élément support (22) soit apte à venir en contact surfacique avec le module IGBT (10).

2. Module IGBT (10) avec capteur de température (20) selon la revendication 1, **caractérisé en ce que** l'élément support (22) du capteur de température (20) affecte une forme au moins partiellement plane, **en ce qu'**une partie (16) du module IGBT (10) affecte une forme au moins partiellement plane et **en ce que**, à l'état monté, l'élément support (22) et la partie (16) du module IGBT (10) sont en contact l'un avec l'autre au niveau de leurs zones planes.

3. Module IGBT (10) avec capteur de température (20) selon la revendication 2, **caractérisé en ce que** la partie (16) est un élément constitutif de la plaque de base du module IGBT (10).

4. Module IGBT (10) avec capteur de température (20) selon l'une quelconque des revendications précédentes, **caractérisé en ce que**, à l'état monté, une pâte thermoconductrice ou similaire est présente entre l'élément support (22) du capteur de température (20) et le module IGBT (10).

5. Module IGBT (10) avec capteur de température (20) selon l'une quelconque des revendications précédentes, le module IGBT (10) étant doté d'un perçage (13) qui est contenu dans ledit module IGBT (10), **caractérisé en ce que**, à l'état monté, l'élément support (22) du capteur de température (20) est fixé au module IGBT (10) par vissage.

6. Module IGBT (10) avec capteur de température (20) selon la revendication 5, **caractérisé en ce que** le vissage sert en même temps à relier le module IGBT (10) à un dissipateur de chaleur.

7. Module IGBT (10) avec capteur de température (20) selon la revendication 5 ou la revendication 6, **caractérisé en ce que** le perçage (13) du module IGBT (10) est prévu au niveau d'un évidement (15) que présente le module IGBT (10).

8. Module IGBT (10) avec capteur de température (20) selon l'une quelconque des revendications précédentes, **caractérisé en ce qu'**il est prévu une carte de circuit imprimé (25) raccordée à l'élément support (22) du capteur de température (20).

9. Module IGBT (10) avec capteur de température (20) selon la revendication 8, **caractérisé en ce qu'**il est rapporté sur la carte de circuit imprimé (25) une prise femelle (27) ou similaire permettant de prélever un signal de sortie de l'élément capteur.

10. Module IGBT (10) avec capteur de température (20) selon l'une quelconque des revendications précédentes, **caractérisé en ce que** l'élément support (22) du capteur de température (20) est réalisé dans un matériau thermoconducteur.

11. Module IGBT (10) avec capteur de température (20) selon l'une quelconque des revendications précédentes, **caractérisé en ce que** l'élément capteur du capteur de température (20) est logé dans un perçage (24) de l'élément support (22).

12. Module IGBT (10) avec capteur de température (20) selon la revendication 11, **caractérisé en ce que** l'élément capteur est immobilisé dans le perçage (24) à l'aide d'une colle thermoconductrice.
